# EUROPEAN PATENT APPLICATION

(11) **EP 2 628 709 A1**
(43) Date of publication of application: **21.08.2013**
(21) Application number: 11832548.9
(22) Date of filing: 12.10.2011
(51) Int. Cl.: C01B 25/10, C01B 25/455

(54) **METHOD FOR PRODUCING PHOSPHORUS PENTAFLUORIDE**

(30) Priority: 14.10.2010 JP 2010231285
(71) Applicant: Daikin Industries, Ltd., Osaka 530-8323 (JP)
(72) Inventor: SUZUKI, Atsushi, Settsu-shi Osaka 566-0044 (JP); TAKUBO, Seiji, Settsu-shi Osaka 566-0044 (JP)
(74) Representative: HOFFMANN EITLE
(86) International application number: PCT/JP2011/073395
(87) International publication number: WO 2012/050113

(57) **Abstract**

Provided is a method for producing phosphorus pentafluoride comprising reacting phosphorus trihalide represented by Formula: PX₃, wherein X represents F, Cl or Br, with gas-phase molecular halogen and hydrogen fluoride. The method of the present invention makes it possible to efficiently produce phosphorus pentafluoride at low cost on an industrial scale.

## Description

### Technical Field

The present invention relates to a method for producing phosphorus pentafluoride and a method for producing lithium hexafluorophosphate.

### Background Art

Phosphorus pentafluoride (PF₅) is useful as a starting material for producing lithium hexafluorophosphate which is used as an electrolyte for use in lithium batteries, lithium ion secondary batteries, etc.

Known methods for producing phosphorus pentafluoride are those using phosphorus pentachloride as a starting material. Specific examples thereof include reacting phosphorus pentachloride (PCl₅) with calcium fluoride (CaF₂) (Non-Patent Literature 1), and reacting phosphorus pentachloride with hydrogen fluoride (HF) (Patent Literature 1).

However, phosphorus pentachloride has very high hygroscopicity, is easily hydrolyzed, and easily reacts with moisture in the air to generate corrosive hydrogen chloride gas (HCl). As a result, there is a concern that the purity of the phosphorus pentachloride is lowered and this may adversely affect the purity of the final product. Furthermore, its high hygroscopicity and hydrolysable property result in handling difficulties and reduce working efficiency.

The method disclosed in Non-Patent Literature 1, wherein phosphorus pentachloride is reacted with calcium fluoride, is completed only under high-temperature conditions, such as 300°C or higher, because it is a solid-solid reaction. Furthermore, because such a reaction is performed batch-wise, it entails low productivity.

In another known method, solid phosphorus (P) is reacted with fluorine gas (F₂) to produce phosphorus pentafluoride (Non-Patent Literature 2). However, this method generates a very large amount of reaction heat and has difficulty in temperature control due to a solid-gas reaction. Thus, it is not an industrially usable method.

On the other hand, a method using phosphorus trichloride (PCl₃ as a starting material is considered to produce lithium hexafluorophosphate at low cost by using inexpensive phosphorus trichloride. For example, Patent Literature 2 listed below discloses a method for producing phosphorus pentafluoride using phosphorus trichloride as a starting material through the following three steps: a first fluorination step, a chlorination step and a second fluorination step. However, because this method uses three reaction steps, a long residence time in the reactor is necessary, requiring a large reactor. Therefore, this method is not preferable for production on an industrial scale.

Patent Literature 3 listed below discloses a method wherein phosphorus trichloride, chlorine gas and hydrogen fluoride are simultaneously reacted. Specifically, in the disclosed method, starting materials are placed in a pressure-resistant reactor at once and reacted batch-wise. Due to an unduly large amount of reaction heat, control of the reaction temperature is extremely difficult in this method.

As described above, a method that can efficiently produce phosphorus pentafluoride at low cost on an industrial scale has not yet been developed.

### Citation List

### Patent Literature

PTL 1: JP6-56413A
PTL 2: JP3494343B
PTL 3: JP4005174B

### Non-Patent Literature

NPL 1: J. Inorg. Nucl. Chem., 1960, vol. 16, 52-59
NPL 2: Ann. Chim. Phys., 1891, 24, 224-282

### Summary of Invention

### Technical Problem

The present invention has been accomplished in view of the current state of the foregoing conventional techniques. The major object of the present invention is to efficiently provide phosphorus pentafluoride at low cost in such a manner that is applicable to an industrial scale.

### Solution to Problem

The present inventors conducted extensive research to achieve the above object. As a result, they found that a method, wherein phosphorus trihalide (PX₃) is used as a starting material and the phosphorus trihalide (PX₃) is reacted with molecular halogen (F₂, Cl₂, or Br₂) and hydrogen fluoride (HF) that are in a gaseous state to produce phosphorus pentafluoride, can control the temperature relatively easily and allows the reaction to proceed with desirable homogeneity. In particular, in a method that uses a flow reactor, wherein molecular halogen and hydrogen fluoride are simultaneously supplied to the reactor and reacted in a gas phase, phosphorus pentafluoride can be effectively produced without a complicated, multistage operation. This method also allows temperature control during the reaction to be readily performed. Thus, according to this method, phosphorus pentafluoride can be effectively produced on an industrial scale. The present invention has been accomplished based on these findings.

More specifically, the present invention provides the following methods for producing phosphorus pentafluoride, and methods for producing lithium hexafluorophosphate.
Item 1. A method for producing phosphorus pentafluoride comprising:
   reacting phosphorus trihalide represented by Formula: PX₃, where X represents F, Cl or Br, with molecular halogen and hydrogen fluoride that are in a gaseous state.
Item 2. The method for producing phosphorus pentafluoride according to Item 1, wherein molecular halogen and hydrogen fluoride are simultaneously supplied to a flow reactor and reacted with phosphorus trihalide in a gas phase.
Item 3. The method according to Item 1 or 2, wherein the molecular halogen is molecular chlorine.
Item 4. The method according to any one of Items 1 to 3, wherein the phosphorus trihalide is phosphorus trichloride.
Item 5. The method according to any one of Items 1 to 4, wherein the molar ratio of molecular halogen to phosphorus trihalide is 1 to 5, and the molar ratio of hydrogen fluoride to phosphorus trihalide is 5 to 20.
Item 6. The method according to any one of Items 2 to 5, wherein the flow reactor is filled with either or both a filler and a fluorination catalyst.
Item 7. The method according to any one of Items 2 to 6, which uses a flow reactor having two or more supply ports from which phosphorus trihalide is supplied, wherein phosphorus trihalide is supplied as a starting material to the reactor in a divided manner from different supply ports.
Item 8. A method for producing lithium hexafluorophosphate comprising reacting phosphorus pentafluoride obtained in the method according to any one of Items 1 to 7 with lithium fluoride.

The method for producing phosphorus pentafluoride of the present invention is described below in detail.

In the present invention, phosphorus trihalide represented by Formula: PX₃, wherein X represents F, Cl or Br, molecular halogen, and hydrogen fluoride are used as starting materials.

Specific examples of phosphorus trihalide include phosphorus trifluoride, phosphorus trichloride, phosphorus tribromide, and the like. Among these, phosphorus trichloride and phosphorus tribromide are liquid at room temperature, and phosphorus trifluoride is a gas at room temperature. Therefore, compared to the case where solid pentachloride (PCl₅) is used, dealing phosphorus trifluoride is easy, handling thereof under a water-insulated condition is also easy, and hydrolysis is suppressed. This allows purity in a final product to be stabilized.

In the present invention, phosphorus trichloride is preferably used as the phosphorus trihalide because it is inexpensive, and a highly pure product thereof is readily available.

Fluorine, chlorine, bromine, etc., can be used as molecular halogen. In particular, chlorine is preferable in terms of its cost.

In the present invention, it is essential to react phosphorus trihalide, which is used as a starting material, with molecular halogen and hydrogen fluoride that are in a gaseous state. In such a method, because molecular halogen and hydrogen fluoride are in a gaseous form, they can be easily contacted with phosphorus trihalide in a uniform manner. This allows the reaction to proceed smoothly, and temperature control during the reaction can be performed relatively simply.

This method may be conducted either continuously or batch-wise, and a particularly preferable embodiment is to use a flow reactor and supply molecular halogen and hydrogen fluoride to the reactor simultaneously. For example, when phosphorus trichloride is used as trihalide and chlorine is used as halogen, if phosphorus trichloride is reacted only with chlorine, solid phosphorus pentachloride is generated in the reactor, causing blockage of the tube. However, when chlorine is simultaneously supplied into the reactor with hydrogen fluoride, all of the products obtained at the outlet are gaseous components, such as phosphorus pentafluoride, phosphorus trifluoride, hydrogen fluoride, and hydrogen chloride; therefore, the problem of blockage can be solved. When phosphorus tribromide is used as trihalide, although the formation of a solid component is not observed, there are concerns that a liquid with a high boiling point is formed, causing problems such as liquid accumulation. However, by supplying halogen and hydrogen fluoride simultaneously, such problems can be solved.

In the production method of the present invention, the molecular halogen and hydrogen fluoride must be in a gaseous state when reacted with phosphorus trihalide; however, they may be in a liquid state when supplied to the reactor. For example, the starting compounds in a liquid state may be evaporated using an evaporator (in an evaporation region), and then passed through a preheating region to allow the reaction to proceed in a gas phase. Alternatively, the starting compounds may be supplied in a liquid state to a reactor, and then evaporated, when the compounds enter the reaction region, to allow the reaction to proceed in a gas phase. The method for evaporating the starting compounds in the reaction region is not particularly limited. The starting compounds may be evaporated into a gas state, for example, by charging a reaction tube with the below-mentioned filler, homogenizing the temperature distribution within the reaction tube, heating the reaction tube to a temperature not less than the evaporation temperature of the starting compound, and supplying the starting compound in a liquid state to the reaction tube.

Molecular halogen may be supplied to the reactor in a liquid or gas form. The specific supply method may be suitably selected depending on the condition of the supplied halogen. For example, molecular fluorine is usually supplied in a gaseous state as fluorine gas. In this case, 100% by mass of fluorine gas, or fluorine gas having a concentration of about 5 to 50% by mass diluted with inert gas such as dry nitrogen gas, may be used as fluorine gas. Fluorine gas may be supplied in such a manner that its flow rate is controlled with a mass flow controller for gases or the like, and then supplied to the reactor. Molecular chlorine and bromine can be supplied to a reactor, for example, when they are in a gaseous state, using a mass flow controller for gases, and when they are in a liquid state, using a mass flow controller for liquids, a liquid supply pump, or the like.

Hydrogen fluoride may also be supplied in a liquid or gas form. It can be supplied to a reactor, for example, when it is in a gaseous state, using a mass flow controller for gases, and when it is in a liquid state, using a mass flow controller for liquids, a liquid supply pump, or the like.

When simultaneously supplying the molecular halogen and hydrogen fluoride to a flow reactor, the entire amount thereof may be supplied in a continuous manner. Alternatively, in order to control the reaction temperature, the molecular halogen and hydrogen fluoride may be supplied stepwise. In this case, it is preferable that the molar ratio of the molecular halogen to the hydrogen fluoride be fixed.

Examples of the flow reactors include an adiabatic reactor, and a multitubular reactor having a heat transmitting medium to remove heat. The reactor is preferably formed of a material resistant to the corrosive action of hydrogen fluoride and the oxidation and corrosive action of halogen, such as Hastelloy, Inconel, Monel, or the like. In order to facilitate the mixing and/or transfer of heat (heat transmission), the reaction tube may be charged with a filler. The filler is not particularly limited and examples thereof include known metal fillers such as raschig ring-type and heli pack-type metal fillers; alumina beads; porous metal filler; and the like.

In order to facilitate a fluorination or chlorination reaction, one or more types of fluorination catalysts may be used instead of a filler or in addition to a filler. The catalyst is not particularly limited and examples thereof include a supported catalyst such as activated carbon and alumina pellets supporting SbCl₅ , SbF₅, SiCl₃, SbF₃, TiF₄, TiCl₄, FeCl₃, AlCl₃, or the like; a fluorinated chromium oxide catalyst represented by the composition formula: CrO_{m-1/2n}Fₙ, wherein m is 1.5≤m≤3, and n is 0.1<n<4, and others.

The phosphorus trihalide may be supplied to the reactor simultaneously with molecular halogen and hydrogen fluoride. Alternatively, the supply of phosphorus trihalide may be started after molecular halogen and hydrogen fluoride have been supplied to the reactor and the supply conditions have become stable, or phosphorus trihalide may be supplied first and the supply of molecular halogen and hydrogen fluoride may be started after the supply conditions of the phosphorus trihalide have become stable.

The method for supplying phosphorus trihalide may vary depending on the conditions of the phosphorus trihalide when supplied. For example, phosphorus trifluoride may be supplied to the reactor while controlling the flow rate thereof using a mass flow controller for gases or the like. Liquid phosphorus trichloride and phosphorus tribromide may be supplied using, for example, a liquid supply pump or a syringe pump. They may also be supplied by a method accompanying a dry inert gas or other methods.

When a flow reactor is used, the entire amount of phosphorus trihalide may be continuously supplied. However, if only one supply port for phosphorus trihalide is provided in the reactor, the reaction will rapidly proceed near the supply port and an unduly large amount of heat may be generated. Therefore, it is preferable that two or more starting material supply ports be provided between the inlet and outlet of the flow reactor and that phosphorus trihalide used as the starting material be divided and supplied from each supply port continuously or intermittently. This prevents the rapid generation of reaction heat and simplifies the temperature control of the reactor.

Similarly, as to molecular halogen and hydrogen fluoride, it is preferable that two or more supply ports be provided between the inlet and outlet of the flow reactor and molecular halogen and hydrogen fluoride be supplied from each supply port continuously or intermittently, so that the rapid generation of reaction heat can be prevented.

The starting materials may be supplied in the following amounts. The molar ratio (X₂/PX₃) of molecular halogen to phosphorus trihalide is preferably about 1 to 5, and more preferably about 1 to 3. When the molar ratio of molecular halogen to phosphorus trihalide is smaller than 1, phosphorus trifluoride is undesirably generated and this may require troublesome separation from phosphorus pentafluoride. However, even if the molar ratio of molecular halogen to phosphorus trihalide were set larger than 5, no further advantageous effect would be achieved and the excess amount thereof would need to be disposed of, thus increasing the cost.

The molar ratio of hydrogen fluoride to phosphorus trihalide (HF/PX₃) is preferably about 5 to 20, and more preferably about 5 to 15. When the molar ratio of hydrogen fluoride to phosphorus trihalide is less than 5, partially fluorinated PFₓCly (x + y = 5) may be generated. However, even if the molar ratio of hydrogen fluoride to phosphorus trihalide were set larger than 20, no increase in the reaction speed of fluorination could be expected. Therefore, an unduly large or small molar ratio of hydrogen fluoride to phosphorus trihalide is undesirable.

The reaction temperature is not particularly limited, but the temperature must be set within the range that, depending on the types of starting materials used, the molecular halogen and hydrogen fluoride can be present in a gaseous state. The reaction temperature is preferably about 20 to 400°C, and more preferably about 20 to 200°C. If the reaction temperature is set low, the reactor needs to be cooled, increasing the cost. In addition, hydrogen fluoride may undesirably liquefy in the reactor. However, if the reaction temperature exceeds 200°C, the yield may be lowered due to an undesirable side reaction.

The pressure inside the reactor may be suitably selected within the range, depending on the specific reaction temperature, in which the molecular halogen and hydrogen fluoride can be present in a gaseous state. The pressure inside the reactor is preferably, as an absolute pressure, about 0.1 to 2 MPa and more preferably about 0.1 to 1 MPa.

The phosphorus pentafluoride obtained by the above method may be further purified, if necessary, by a known method, such as purification using an adsorbent (e.g., synthetic zeolite and activated carbon); membrane separation; distillation; etc.

The phosphorus pentafluoride obtained by the method of the present invention is a compound usable as a starting material for producing lithium hexafluorophosphate (LiPF₆) that is used as an electrolyte for use in lithium batteries, lithium ion batteries, etc. The method for producing lithium hexafluorophosphate from phosphorus pentafluoride is not particularly limited as long as lithium hexafluorophosphate can be produced by reacting the phosphorus pentafluoride obtained by the method of the present invention with lithium fluoride, and a known method can be applied. Examples include a method wherein solid lithium fluoride and gaseous phosphorus pentafluoride are reacted; a method wherein anhydrous hydrogen fluoride is used as a solvent and lithium fluoride dissolved therein is reacted with gaseous lithium pentafluoride; a method wherein lithium fluoride and gaseous phosphorus pentafluoride are reacted in an organic solvent; etc. As the specific reaction conditions of these methods, those for known methods disclosed, for example, in JP64-72901A and J. Chem. Soc. Part 4, 4408 (1963) may be applied.

### Advantageous Effects of Invention

The method for producing phosphorus pentafluoride of the present invention makes it possible to obtain phosphorus pentafluoride in a single-step, continuous reaction using a flow reactor. This simplifies the supply of the starting materials and the collection of the final product, allowing the target product to be efficiently obtained. Furthermore, compared to the case where a batch type reactor is used, the reactor can be cooled in a simple manner, and the reaction conditions can be easily controlled. Further, by simultaneously supplying molecular halogen and hydrogen fluoride to a reactor, reactor blockage can be prevented.

Therefore, the present invention makes it possible to produce phosphorus pentafluoride that is highly usable as a starting material for lithium hexafluorophosphate on an industrial scale, at low cost, and in an efficient manner.

### Description of Embodiments

The present invention is explained in further detail with reference to Examples.

### Example 1

High alumina balls having a diameter of 4.5 mm were placed in a tubular Hastelloy reactor having an inside diameter of 20 mm and a length of 400 mm. The tubular reactor was maintained at an absolute pressure of 0.1 MPa and temperature of 100°C. Anhydrous hydrogen fluoride (flow rate: 150 mL/min at 0° C and 0.1 MPa) and chlorine gas (flow rate: 23 mL/min at 0°C and 0.1 MPa) were simultaneously supplied to the reactor. Thereafter, dry nitrogen gas was bubbled into phosphorus trichloride heated to 41°C at 35 mL/min (flow rate at 0°C and 0.1 MPa) and supplied to the reactor. In this case, the amount of supply of phosphorus trichloride calculated from the vapor pressure was 15 mL/min (flow rate at 0° C and 0.1 MPa).

In order to quantify the phosphorus pentafluoride, R14 (CF₄) gas was supplied from the reactor inlet, and gas at the reactor outlet was subjected to quantitative analysis using FT-IR. The result confirmed that phosphorus trichloride was converted into phosphorus pentafluoride almost quantitatively.

### Example 2

Nickel balls having a diameter of 2 mm were placed in a tubular Hastelloy reactor having an inside diameter of 20 mm and a length of 400 mm. The tubular reactor was maintained at an absolute pressure of 0.1 MPa and temperature of 50°C. Anhydrous hydrogen fluoride (flow rate: 450 mL/min at 0°C and 0.1 MPa) and chlorine gas (flow rate: 45 mL/min at 0°C and 0.1 MPa) were simultaneously supplied to the reactor. Thereafter, phosphorus trichloride was supplied to the reactor at 0.2 g/min using a liquid supply pump.

In order to quantify the phosphorus pentafluoride, R14 (CF₄) gas was supplied from the reactor inlet, and gas at the reactor outlet was subjected to quantitative analysis using FT-IR. The result confirmed that phosphorus trichloride was converted into phosphorus pentafluoride almost quantitatively.

### Comparative Example 1

An experiment was conducted under the same conditions as Example 1 except that chlorine was not supplied to the reactor.
In order to quantify the phosphorus pentafluoride, R14 (CF₄) gas was supplied from the reactor inlet, and gas at the reactor outlet was subjected to quantitative analysis using FT-IR. The result confirmed that PF₅ production was not observed.

## Claims

1. A method for producing phosphorus pentafluoride comprising reacting phosphorus trihalide represented by Formula: PX₃, wherein X represents F, Cl or Br, with molecular halogen and hydrogen fluoride that are in a gaseous state.

2. The method for producing phosphorus pentafluoride according to claim 1, wherein molecular halogen and hydrogen fluoride are simultaneously supplied to a flow reactor and reacted with phosphorus trihalide in a gas phase.

3. The method according to claim 1 or 2, wherein the molecular halogen is molecular chlorine.

4. The method according to any one of claims 1 to 3, wherein the phosphorus trihalide is phosphorus trichloride.

5. The method according to any one of claims 1 to 4, wherein the molar ratio of molecular halogen to phosphorus trihalide is 1 to 5, and the molar ratio of hydrogen fluoride to phosphorus trihalide is 5 to 20.

6. The method according to any one of claims 2 to 5, wherein the flow reactor is filled with either or both a filler and a fluorination catalyst.

7. The method according to any one of claims 2 to 6, which uses a flow reactor having two or more supply ports from which phosphorus trihalide is supplied, wherein phosphorus trihalide is supplied as a starting material to the reactor in a divided manner from different supply ports.

8. A method for producing lithium hexafluorophosphate comprising reacting phosphorus pentafluoride obtained in the method according to any one of claims 1 to 7 with lithium fluoride.
